# EUROPÄISCHE PATENTSCHRIFT

(11) **EP 3 197 721 B1**
(45) Veröffentlichungstag und Bekanntmachung des Hinweises auf die Patenterteilung: **15.08.2018**
(21) Anmeldenummer: 14771877.9
(22) Anmeldetag: 22.09.2014
(51) Int. Cl.: B60R 3/02

(54) **TRITTPLATTE MIT DEHNUNGSELEMENT**
STEP PLATE HAVING EXPANSION ELEMENT
PLAQUE DE MARCHEPIED AVEC ÉLÉMENT DE DILATATION

(43) Veröffentlichungstag der Anmeldung: 02.08.2017
(73) Patentinhaber: Gebr. Bode GmbH & Co. KG, 34123 Kassel (DE)
(72) Erfinder: KNOTHE, Uwe, 37133 Friedland (DE)
(74) Vertreter: Patentanwälte Bauer Vorberg Kayser
(86) Internationale Anmeldenummer: PCT/EP2014/070116
(87) Internationale Veröffentlichungsnummer: WO 2016/045691

(56) Entgegenhaltungen:
- EP-A1- 2 033 870
- WO-A1-2014/107756
- DE-A1- 10 351 988
- DE-A1-102009 039 035

## Beschreibung

Die Erfindung betrifft einen Schiebetritt für ein Fahrzeug des öffentlichen Personenverkehrs mit den Merkmalen aus dem Oberbegriff des Schutzanspruchs 1.

Schiebetritte werden verwendet, um Personen das Ein- und Aussteigen in ein Fahrzeug des öffentlichen Personenverkehrs zu erleichtern. Sie weisen aus diesem Grund eine ein- und ausfahrbare Trittplatte mit einer belastbaren Trittfläche auf. Die Trittplatte ist meist in einem Rahmen als Aufnahmevorrichtung angeordnet, welcher fest mit dem Fahrzeug verbunden ist.

Grundsätzlich gibt es zahlreiche Ansätze zur Ermittlung von Kräften, die auf die Trittfläche wirken. Zum Einen soll ein Einklemmschutz gegeben sein, zum Anderen darf die Trittfläche nicht eingefahren werden, solange sich Personen auf dieser befinden. Deswegen sind Schiebetritte oftmals mit Sensorik zum Erkennen etwaiger Auf- oder Seitenlasten ausgestattet.

Bei bekannten Schiebetritten wird die Trittflächensensierung oftmals mittels einer Trittkontaktmatte und/oder Näherungsschaltern realisiert. Da die geforderten Bauhöhen bei Zustiegssystemen immer niedriger werden, wird es aber immer schwieriger die detektierenden Elemente unterzubringen. Auch sind sie aufgrund unvermeidbarer wie z. B. mechanischen Erschütterungen, Schmutz, Feuchtigkeit, Spritzwasser oder Frost vergleichsweise störanfällig und einem hohen Verschleiß unterworfen.

Um dieses Problem zu lösen, gibt es Ansätze Biegesensoren bzw. Dehnungsmessstreifen (DMS-Sensoren) im Zustiegssystem bzw. Schiebetritt zu verwenden. Grundsätzlich sind verschiedene Positionen für die Anbringung der DMS-Sensoren geeignet. Wesentlich ist, dass an den genutzten Bauteilen oder Positionen unter Belastung eine Verformung stattfindet. Diese Verformung kann mit dem DMS-Sensor gemessen und als Signal ausgewertet werden.

Zum Beispiel ist aus der DE 103 59 988 A1 eine System bekannt, bei dem die Störkräfte dadurch erfasst werden, dass z.B. der Rahmen der Zutritts- und/oder Zufahrtshilfe mittels Elastomerfedern am Fahrzeugboden befestigt und dadurch ermöglichte Kippbewegungen des Rahmens durch Meßfedern und Dehnungsmessstreifen aufweisende Wägezellen erfasst werden. Dies setzt eine bestimmte Montage der Zustiegs- und/oder Zufahrtshilfe am Fahrzeug voraus, was wegen der zahlreichen unterschiedlichen Fahrzeugtypen aber unbefriedigend ist. Außerdem weisen diese bekannten Zustiegs- und/oder Zufahrtshilfen Dehnungsmessstreifen auf, die zwischen der verschiebbaren Trittplatte und einem ihr zugeordneten Lenker eines Kurbelantriebs und/oder zwischen einer Kipp- und verschiebbar gelagerten Trittplatte und einem mit dieser gekoppelten Trägerbalken angeordnet sind. Auch diese Konstruktion ist aufwendig und hat den Nachteil, dass aufwendige Schleppkabel oder ähnliches erforderlich sind, um die Dehnungsmessstreifen mit den erforderlichen Steuereinheiten für den Antrieb zu verbinden. Das erhöht nicht nur die Herstellungskosten, sondern ist auch mit unerwünschtem Verschleiß und dadurch bedingten Störungen verbunden
Die DE 10 2009 039 035 A1 zeigt einen Trittrahmen und eine darin linear verschiebbar geführte Trittplatte. Um insbesondere vertikal auf die Trittplatte einwirkende Kräfte detektieren zu können, ist wenigstens ein Messelement vorgesehen, welches im Bereich mindestens eines der Befestigungselemente eines Rahmens angeordnet ist. Gemäß einer Ausführungsform kann das Messelement einen Dehnungsmessstreifen enthalten, beispielsweise als Dehnungsmessstreifen-Einpresssensor. Der Einbau und die Wartung des Messelementes ist relativ aufwändig. Auch kann die Anordnung nicht problemlos auf andere Schiebtritte übertragen werden, ohne technische Anpassungen vornehmen zu müssen.

Die WO 2014/107756 A1 zeigt einen Schiebetritt gemäß dem Oberbegriff des Anspruchs 1. Auch ist es bei bekannten Systemen oftmals schwierig, DMS-Sensoren vor mechanischen Belastungen zu schützen. Um dieses Problem zu lösen, werden oftmals komplette DMS-Systeme verwendet, wie z.B. Dehnungsaufnehmer, Drehmomentaufnehmer oder Kraftaufnehmer, wie Scherkraftaufnehmer, Wägezellen, Druckmessdosen, Kraftmessbolzen oder Zug-Druck-Kraftaufnehmer. Diese Systeme sind in der Regel dadurch geschützt, dass sie in eigenen Gehäusen untergebracht sind an bestehenden Bauteilen befestigt werden können.
Auch wurde versucht an einem Schiebetritt mit DMS-Sensoren unmittelbar die Biegung der Seitenwangen der Trittplatte auszuwerten. Mit DMS-Sensoren, die auf die Innenseiten der beiden Seitenwangen aufgeschraubt wurden, konnten aber keine verlässlichen Werte gemessen werden, da allein die Reihenfolge, mit der die Befestigungsschrauben angezogen wurden, großen Einfluss auf das Messsignal hatte. Auch verschob sich bei Belastung der Nullpunkt derart stark, dass eine verlässliche Auswertung nahezu unmöglich war.

Es ist die Aufgabe der Erfindung, einen Schiebtritt mit verbesserter Sensierung zu schaffen, wobei die Nachteile des Standes der Technik vermieden werden sollen. Der Schiebtritt soll eine zuverlässige Messung ermöglichen, der benötigte Bauraum soll gering sein und es soll eine einfache Montage und Demontage eines Schiebetritts möglich sein. Insbesondere soll der Schiebtritt auch für eine Nachrüstung in bestehende Systeme, ggfs. mit einem nur geringen Änderungsaufwand geeignet sein.

Die Erfindung löst die Aufgabe mit den Merkmalen des Schutzanspruchs 1. Vorteilhafte Weiterbildungen sind in den abhängigen Ansprüchen beschrieben.

Demnach weist zumindest eine der Seitenwangen des Schiebetritts im Bereich einer der Rollen einen gekröpften Abschnitt auf, der zwischen zwei Rollen angeordnet ist und der ein Dehnungsmesselement zur Erfassung von Verformungen aufweist.

Die Kröpfung verläuft vorteilhafterweise in horizontaler Ebene, also in der Ein- und Ausfahrebene der Trittplatte. Grundsätzlich ist je nach Einbaubedingung aber auch eine vertikale Kröpfung denkbar. In den nachfolgenden Erläuterungen der Erfindung wird von einer horizontalen Kröpfung ausgegangen.

Das Dehnungsmesselement ist schräg zur im Wesentlichen gerade verlaufenden Seitenwange angeordnet. Durch das Schrägstellen des Dehnungsmesselementes werden Torsionseinflüsse, die aufgrund des Hebelarms der seitlich angeordneten Rolle auftreten können, weitgehend ausgeschlossen.

Vorteilhafterweise weist der gekröpfte Abschnitt mindestens zwei Dehnungsmesselemente auf, die unabhängig voneinander messen und deren Werte unabhängig voneinander ausgewertet werden. Die beiden Dehnungsmesselemente erstrecken sich im Wesentlichen in horizontaler Ebene und messen im Wesentlichen Verformungen in vertikaler Richtung, insbesondere von oben. Je nach Auswertungssoftware sind aber auch Rückschlüsse auf Kräfte aus anderen Richtungen ermittelbar. Erfindungsgemäß ermöglicht bzw. verbessert insbesondere die Verwendung von mindestens zwei Dehnungsmesselementen die Ermittlung von Kräften schräg zur Vertikalen oder sogar von horizontal wirkenden Kräften.

Die Ermittlung horizontal wirkender Kräfte kann erfindungsgemäß weiterhin dadurch verbessert werden, dass sich zusätzlich zumindest ein weiteres Dehnungsmesselement im Wesentlichen in vertikaler Ebene erstreckt und im Wesentlichen Verformungen in horizontaler Richtung misst. Dieses vertikale Dehnungsmesselement kann eines der horizontalen Dehnungsmesselemente ersetzen, es kann aber auch zusätzlich vorgesehen sein.

Zu Vermeidung von übermäßigen Verschleiß und Verschmutzungen sind die Dehnungsmesselemente vorzugsweise durch eine Abdeckung geschützt. Diese kann insbesondere lösbar befestigt sein.

Als Dehnungsmesselemente eignen sich insbesondere Dehnungsmessstreifen. Diese sind in einer besonders vorteilhaften Ausführungsvariante auf den gekröpften Abschnitt aufgeklebt, alternativ können sie auch verschraubt oder vernietet sein.

Die Einleitung der Last erfolgt oftmals an unterschiedlichen Positionen der Trittfläche. Um in jedem Fall ein aussagefähiges Signal zu erhalten, ist erfindungsgemäß vorgesehen, an mindestens zwei Stellen (z. B. rechts und links an den Seitenwangen der Trittplatte) zu messen. Die Messergebnisse bzw. Signale werden in einem Summensignal zusammen gefasst. Das Summensignal liefert somit einen lastabhängigen Wert, der unabhängig der Position der Lasteinleitung auf der Trittplatte, sowie unabhängig der Ausfahrposition des Ausschubs ist.

In einer besonders vorteilhaften Ausführungsvariante ist zumindest eine der beiden Seitenwangen durch ein im Wesentlichen gerade verlaufendes Seitenwangenelement und ein Sensorwangenelement, das den gekröpften Abschnitt aufweist, gebildet. Das Seitenwangenelement und das Sensorwangenelement sind formschlüssig miteinander verbunden und weisen jeweils eine der Rollen auf.

Das Sensorwangenelement kann somit nachträglich an ein freies Ende der Seitenwange angebracht werden. Das freie Ende ist in Ausschubrichtung der Trittplatte hinten angeordnet, befindet sich also bei Verwendung eines Gehäuses in der Regel im Gehäuse des Schiebetritts. Die Seitenwange ist somit zweiteilig aufgebaut, wobei beide Elemente, das Seitenwangenelement und das Sensorwangenelement jeweils mindestens eine Rolle tragen. Erfindungsgemäß ist es dadurch möglich, Schiebetritte mit Sensorwangenelementen nachzurüsten, auf einen kompletten Austausch des Schiebetritts oder der Trittplatte kann verzichtet werden.

Die Kröpfung bewirkt, dass die Rollen an den beiden Elementen miteinander fluchten, in Ein-/Ausschubrichtung also hintereinander angeordnet sind und somit gemeinsam in einer am Fahrzeug befestigten Schiene abrollen können.

Die Verbindung des Seitenwangenelements und des Sensorwangenelements kann fest oder lösbar erfolgen. Als lösbare Verbindung bietet sich eine Schraubverbindung an.

Im Bereich der Schraubverbindung kann erfindungsgemäß weiterhin mindestens eine Passfeder angeordnet sein, über die insbesondere Scherkräfte übertragen werden können. Die Passfeder kann in Ein-/Ausschubrichtung vor oder hinter der Schraubverbindung, aber auch unterhalb oder oberhalb positioniert sein. Die Nutzung der zusätzlichen Passfeder eignet sich auch dann, wenn anstelle einer Schraubverbindung beispielsweise eine Nietverbindung verwendet wird.

Durch die Anordnung der Dehnungselemente in Ausschubrichtung hinter der Verbindung des Seitenwangenelements und des Sensorwangenelements, liegt die Messzone ebenfalls in Ausschubrichtung der Trittplatte hinter der Verbindung. Dadurch wird erreicht, dass die Verbindung zwischen den Elementen nur einen geringen Einfluss auf das Messsignal hat. Eine Verschiebung des Nullpunktes wird durch diese Anordnung nahezu ausgeschlossen.

Um die Aufnahme von horizontal wirkenden Kräften zu verbessern, kann erfindungsgemäß vorgesehen sein, Profilrollen zu verwenden, die in der am Fahrzeug befestigten Schiene seitliche nicht verschoben werden können. Dadurch werden seitliche bzw. horizontal wirkende Kräfte über die Trittplatte auf die Profilrolle und über diese auf die Dehnungsmesselemente übertragen.

In einer besonders vorteilhaften Ausführungsvariante weist ein erfindungsgemäßer Schiebetritt auf einer Seite zylindrische, gerade Laufrollen und auf der gegenüberliegenden Seite Profilrollen auf. Zum Einen wird hierdurch erreicht, dass auch seitliche bzw. horizontale Kräfte gemessen werden können, zum Anderen ist dadurch ein Toleranzausgleich bezüglich der Breite der Trittplatte bzw. des Abstands der Schienen möglich.

Die zylindrischen Laufrollen nehmen die vertikalen Kräfte auf, die durch das Betreten des Ausschubs auftreten. Die horizontalen Kräfte, wie Verdrehung durch seitliche Stöße, werden von den profilierten Laufrollen aufgenommen.

Die Profilrollen nehmen vertikale und horizontale Kräfte auf, die durch das Betreten des Ausschubs und/oder durch seitliche Belastung auftreten. Horizontale Kräfte können z. B. durch Verdrehung des Ausschubs durch seitliche Stöße auftreten.

Das Sensorwangenelement ist erfindungsgemäß derart ausgelegt, dass es beidseitig an die beiden Seitenwangenelemente angefügt werden kann. Dementsprechend sind beispielsweise die Bohrungen für die Schraubverbindungen oder auch die Passfeder symmetrisch angeordnet. In einer besonders vorteilhaften Ausführungsvariante sind zwei Bohrungen für Schraubverbindungen vorgesehen, die sich in horizontaler Richtung durch einen Verbindungsabschnitt des Sensorwangenelements erstrecken. Durch die symmetrische Ausführung kann ein Sensorwangenelement an das rechte oder linke Seitenwangenelement angefügt werden.

Aufgrund des geringen notwendigen Bauraums für die Sensoreinrichtung eignet sich das erfindungsgemäße System insbesondere für Ein-/Ausstiegsvorrichtungen die zwei oder mehr übereinander angeordneten Schiebetritten. Dies ist insbesondere vorteilhaft, wenn das Fahrzeug beispielsweise ländergrenzüberschreitend eingesetzt wird, da in verschiedenen Ländern die vorgeschriebene Höhe der Ein-/Ausstiegsvorrichtung unterschiedlich genormt sein kann. Somit kann das Fahrzeug in zwei Ländern mit unterschiedlichen Einstiegshöhen eingesetzt werden. Die Ansteuerung der Schiebetritt kann derart ausgestaltet sein, dass der Fahrer des Fahrzeugs beim Grenzübertreten einen Schalter betätigt, wodurch bestimmt wird, welcher Schiebetritt an den Stationen ausfährt.

Die Schiebetritte können auch derart angesteuert werden, dass die Ausschübe an einer Station unterschiedlich weit ausfahren, so dass die Trittflächen eine Treppe bilden.

Ein mögliches Ausführungsbeispiel der Erfindung wird anhand der nachfolgenden Figuren beschrieben. Es zeigen:
- Fig. 1: eine perspektivische Darstellung eines Schiebtritts mit einem Rahmen,
- Fig. 2: die Trittplatte aus Fig. 1;
- Fig. 3: ein Sensorwangenelement und ein Seitenwangenelement mit zylindrischen Laufrollen, in Ausschubrichtung rechts;
- Fig. 4: ein Sensorwangenelement und ein Seitenwangenelement mit Profilrollen, in Ausschubrichtung links;

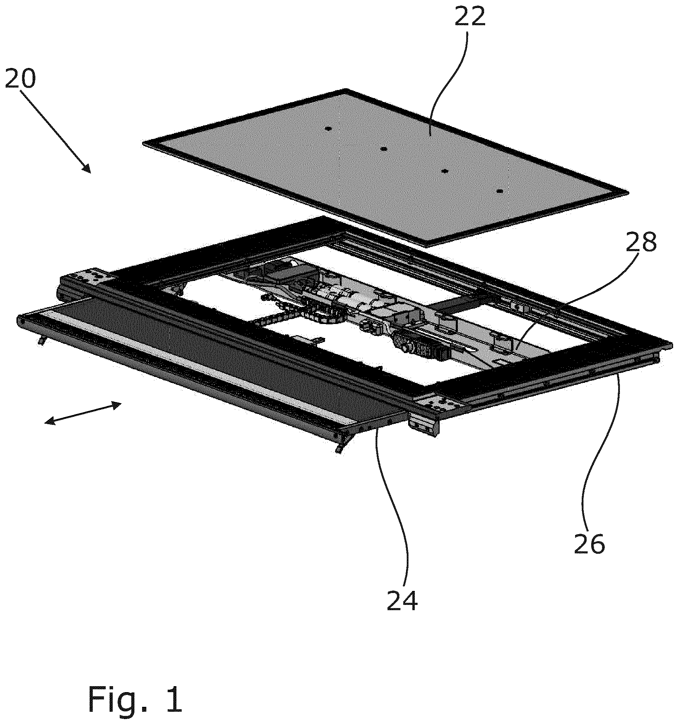

Figur 1 zeigt einen Schiebetritt 20 in perspektivischer Darstellung. Eine Deckplatte 22 ist zur besseren Ansicht abgehoben gezeichnet. Eine Trittplatte 24 läuft in einem Rahmen 26. Der Rahmen 26 ist fest mit einem nicht gezeigten Fahrzeug verbunden, üblicherweise unterhalb einer Tür.

Die Trittplatte 24 ist in einer Ein-/Ausschubrichtung verfahrbar, angedeutet durch den Doppelpfeil. Innerhalb des Rahmens 26 ist ein Querträger 28 angeordnet, der im gezeigten Ausführungsbeispiel einen Antrieb und weitere notwendige Komponenten trägt.

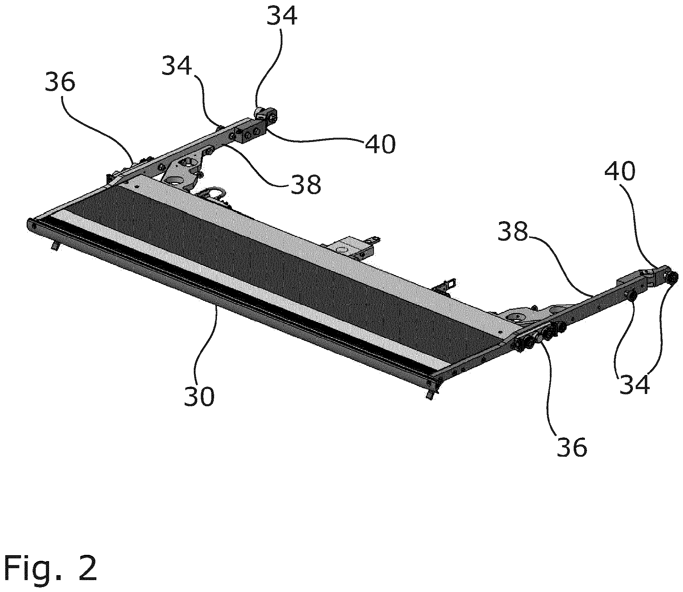

Figur 2 zeigt die Trittplatte 24 in ausgebautem Zustand. Sie ist im Wesentlichen aus einer Trittfläche 30, und zwei Seitenwangen 32 mit daran angeordneten Rollen 34 gebildet. Die Trittfläche 30 erstreckt sich zwischen den beiden Seitenwangen 32 im Wesentlichen in horizontaler Ebene. Die Rollen 34 laufen in Schienen, die innerhalb des Rahmens 26 angeordnet sind und sich in Ein-/Ausschubrichtung erstrecken. Figur 2 zeigt eine Trittplatte 30 mit jeweils zwei in Ausschubrichtung hinteren Rollen 34 und einem Wippenrollenapparat 36, der in Ausschubrichtung weiter vorne angeordnet ist und vier weitere Rollen 34 trägt.

Die Seitenwangen 32 sind durch ein Seitenwangenelement 38 und ein Sensorwangenelement 40 gebildet, wobei das Sensorwangenelement 40 am in Ausschubrichtung hinteren freien Ende des jeweiligen Seitenwangenelements 38 angeordnet ist.

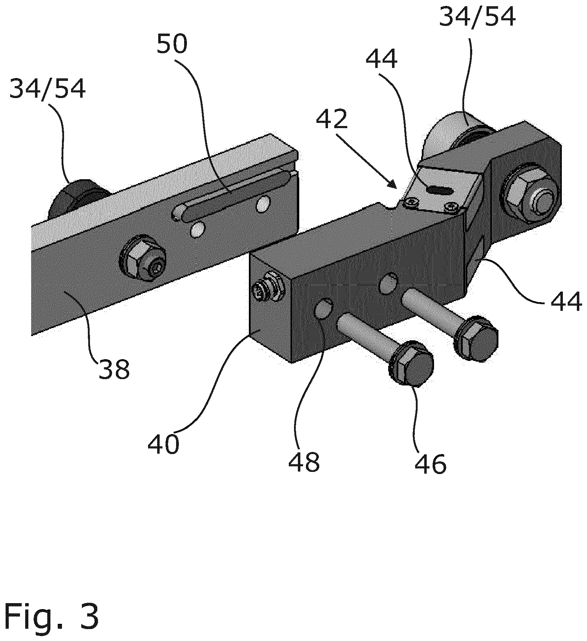

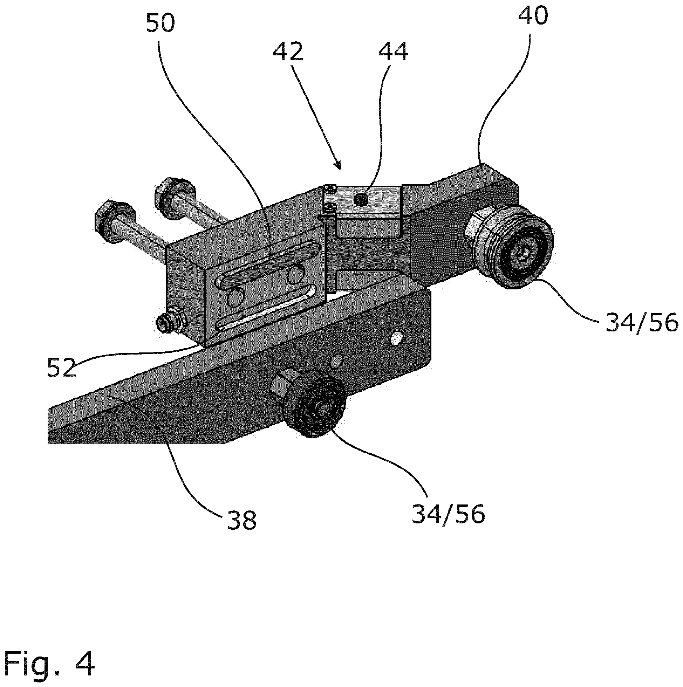

Das Sensorwangenelement 40 ist in den Figuren 3 und 4 in vergrößerter Darstellung gezeigt. Erkennbar ist, dass das Sensorwangenelement 40 einen gekröpften Abschnitt 42 aufweist. Erkennbar sind Abdeckungen 44, unter denen sich nicht gezeigte Dehnungselemente befinden. Diese verlaufen im Wesentlichen in horizontaler Richtung und sind in einer bevorzugten Ausführungsvariante auf das Sensorwangenelement 40 bzw. den gekröpften Abschnitt 42 aufgeklebt.

Erkennbar ist auch, dass das Sensorwangenelement 40 mit dem Seitenwangenelement 38 formschlüssig verbindbar ist, im gezeigten Ausführungsbeispiel über eine Schraubverbindung. Schrauben 46 erstrecken sich zu diesem Zweck durch im Wesentlichen horizontal verlaufende Bohrungen 48. Weiterhin sind Passfedern 50 zur Übertragung von Schwerkräften vorgesehen. Diese erstrecken sich im gezeigten Ausführungsbeispiel oberhalb oder unterhalb der Bohrungen 48 entlang der Ein-/Ausschubrichtung. Die Passfedern 50 stehen gegenüber dem Seitenwangenelement 38 bzw. dem Sensorwangenelement 40 vor und erstrecken sich im zusammengesetzten Zustand der beiden Elemente in eine gegenüberliegende Nut 52. Die Bohrungen 48, die Passfedern 50 und die Nuten 52 sind derart ausgeführt und angeordnet, dass an einem Sensorwangenelement 40 keine Veränderung vorgenommen werden muss, um dieses in Ein-/Ausschubrichtung rechts oder links an einem der beiden Seitenwangenelement 38 anbringen zu können.

Um eine möglichst optimale Ermittlung der auftretenden Kräfte zu ermöglichen, sind auf einer Seite zylindrische Rollen 54 und auf der anderen Seite Profilrollen 56 vorgesehen. Die Profilrollen 56 laufen auf einer der Schienen und können Kräfte aus seitlichen Richtungen aufnehmen.

Die Erfindung ist nicht auf das gezeigte Ausführungsbeispiel beschränkt, sondern umfasst ähnliche Ausführungsvarianten, die sich die wesentlichen Erkenntnisse der Erfindung zunutze machen. Insbesondere können technische Merkmale aus der Beschreibung und den Patentansprüchen in technologisch sinnvoller Weise miteinander kombiniert werden.

### Bezugszeichenliste

- 20: Schiebetritt
- 22: Deckplatte
- 24: Trittplatte
- 26: Rahmen
- 28: Querträger
- 30: Trittfläche
- 32: Seitenwangen
- 34: Rollen
- 36: Wipprollenapparat
- 38: Seitenwangenelement
- 40: Sensorwangenelement
- 42: gekröpfter Abschnitt
- 44: Abdeckungen
- 46: Schrauben
- 48: Bohrungen
- 50: Passfeder
- 52: Nut
- 54: zylindrische Rollen
- 56: Profilrollen

## Patentansprüche

1. Schiebetritt (20) für ein Fahrzeug des öffentlichen Personenverkehrs, welcher eine durch einen Antrieb in einer Ein-/Ausschubrichtung horizontal ein- und ausfahrbare Trittplatte (24) mit zwei Seitenwangen und einer zwischen den Seitenwangen angeordneten Trittfläche (30) aufweist, wobei die Trittplatte (24) an jeder Seitenwange mindestens zwei angeordnete Rollen (34) aufweist, die in einer am Fahrzeug befestigten Schiene abrollen, und wobei zumindest eine der Seitenwangen im Bereich einer der Rollen (34) einen gekröpften Abschnitt (42) aufweist, der ein Dehnungsmesselement zur Erfassung von Verformungen aufweist, **dadurch gekennzeichnet, dass** die Seitenwange zweiteilig aufgebaut ist, wobei beide Elemente, ein Seitenwangenelement (38) und ein Sensorwangenelement (40), jeweils mindestens eine Rolle tragen und der gekröpfte Abschnitt (42) zwischen den Rollen (34) an einer Seitenwange angeordnet ist.

2. Schiebetritt nach Anspruch 1, **dadurch gekennzeichnet, dass** die Seitenwange in horizontaler Ebene gekröpft ist.

3. Schiebetritt nach Anspruch 1 oder Anspruch 2, **dadurch gekennzeichnet, dass** der gekröpfte Abschnitt (42) mindestens zwei Dehnungsmesselemente aufweist.

4. Schiebetritt nach Anspruch 3, **dadurch gekennzeichnet, dass** sich die beiden Dehnungsmesselemente im Wesentlichen in horizontaler Ebene erstrecken und im Wesentlichen Verformungen in vertikaler Richtung messen.

5. Schiebetritt nach Anspruch 3, **dadurch gekennzeichnet, dass** sich mindestens ein Dehnungsmesselement im Wesentlichen in horizontaler Ebene erstreckt und im Wesentlichen Verformungen in vertikaler Richtung misst und sich mindestens ein Dehnungsmesselement im Wesentlichen in vertikaler Ebene erstreckt und im Wesentlichen Verformungen in horizontaler Richtung misst.

6. Schiebetritt nach einem der Ansprüche 1 bis 5, **dadurch gekennzeichnet, dass** das Dehnungsmesselement als Dehnungsmessstreifen ausgeführt ist.

7. Schiebetritt nach einem der Ansprüche 1 bis 6, **dadurch gekennzeichnet, dass** das Seitenwangenelement ein im Wesentlichen gerade verlaufendes Seitenwangenelement (38) ist und dass, das Sensorwangenelement (40) den gekröpften Abschnitt (42) aufweist, wobei das Seitenwangenelement (38) und das Sensorwangenelement (40) formschlüssig miteinander verbunden sind.

8. Schiebetritt nach Anspruch 7, **dadurch gekennzeichnet, dass** das Seitenwangenelement (38) und das Sensorwangenelement (40) über eine Schraubverbindung lösbar miteinander verbunden sind.

9. Schiebetritt nach Anspruch 8, **dadurch gekennzeichnet, dass** im Bereich der Schraubverbindung weiterhin mindestens eine Passfeder (50) angeordnet ist.

10. Schiebetritt nach einem der Ansprüche 1 bis 9, **dadurch gekennzeichnet, dass** beide Seitenwangen jeweils einen gekröpften Abschnitt (42) mit Dehnungsmesselement aufweisen.

11. Schiebetritt nach einem der Ansprüche 1 bis 10, **dadurch gekennzeichnet, dass** zumindest eine der Rollen (34) zumindest einer der beiden Seitenwangen als Profilrolle ausgeführt ist.

## Claims

1. A sliding step (20) for a public transport vehicle, comprising a tread plate (24), which is horizontally retractable and extendable in a retracting/extending direction by means of a drive unit, with two side bars and a tread surface (30) disposed between the side bars, wherein the tread plate (24) has on each side bar at least two rollers (34) disposed thereon that roll in a rail attached to the vehicle, and wherein at least one of the side bars has, in the region of one of the rollers (34), an offset portion (42) having a strain gauge element for detecting deformation, **characterized in that** the side bar has a two-part construction, wherein the two members, a side bar member (38) and a sensor bar member (40), each carry at least one roller, and the offset portion (42) is disposed between the rollers (34) on a side bar.

2. The sliding step according to claim 1, **characterized in that** the side bar is offset in the horizontal plane.

3. The sliding step according to claim 1 or claim 2, **characterized in that** the offset portion (42) comprises at least two strain gauge elements.

4. The sliding step according to claim 3, **characterized in that** the two strain gauge elements extend substantially in the horizontal plane and substantially measure deformation in the vertical direction.

5. The sliding step according to claim 3, **characterized in that** at least one strain gauge element extends substantially in the horizontal plane and substantially measures deformation in the vertical direction, and at least one strain gauge element extends substantially in the vertical plane and substantially measures deformation in the horizontal direction.

6. The sliding step according to any one of the claims 1 to 5, **characterized in that** the strain gauge element is configured as a strain gauge strip.

7. The sliding step according to any one of the claims 1 to 6, **characterized in that** the side bar member is a side bar member (38) extending in a substantially straight manner, and that the sensor bar member (40) includes the offset portion (42), wherein the side bar member (38) and the sensor bar member (40) are positively connected to each other.

8. The sliding step according to claim 7, **characterized in that** the side bar member (38) and the sensor bar member (40) are detachably connected to each other via a screw connection.

9. The sliding step according to claim 8, **characterized in that**, furthermore, at least one feather key (50) is disposed in the region of the screw connection.

10. The sliding step according to any one of the claims 1 to 9, characterized both side bars each comprise one offset portion (42) with a strain gauge element.

11. The sliding step according to any one of the claims 1 to 10, **characterized in that** at least one of the rollers (34) of at least one of the two side bars is configured as a profile roller.

## Revendications

1. Marche coulissante (20) pour véhicule des transports publics, qui comprend une plaque de marchepieds (24) avec deux joues latéraux et une surface de marche (30) disposée entre les joues latéraux, le plaque de marchepieds (24) étant rétractable et prolongeable par un entraînement, dans laquelle la plaque de marchepieds (24) à chaque joue latérale comprend au moins deux galets (34) arrangés, qui roule dans un rail fixé sur le véhicule, et dans laquelle au moins l'une des joues latéraux, dans la région d'un des galets (34), comprend une partie coudée (42), qui comprend un élément de mesure d'allongement, pour déterminer de déformations, **caractérisée en ce que** la joue latérale est conçue en deux parties dans laquelle les deux éléments, à savoir un élément de joue latérale (38) et un élément de joue de capteur (40), chacun porte au moins un galet, et la partie coudée (42) est disposée entre les galets (34) sur une joue latérale.

2. Marche coulissante selon la revendication 1, **caractérisée en ce que** la joue latérale est coudée dans le plan horizontal.

3. Marche coulissante selon la revendication 1 ou la revendication 2, **caractérisée en ce que** la partie coudée (42) comprend au moins deux éléments de mesure d'allongement.

4. Marche coulissante selon la revendication 3, **caractérisée en ce que** les deux éléments de mesure d'allongement s'étendent sensiblement dans le plan horizontal, tout en mesurant sensiblement des déformations en direction verticale.

5. Marche coulissante selon la revendication 3, **caractérisée en ce qu'**au moins un élément de mesure d'allongement s'étend sensiblement dans le plan horizontal tout en mesurant sensiblement des déformations en direction verticale, et au moins un élément de mesure d'allongement s'étend sensiblement dans le plan vertical tout en mesurant des déformations sensiblement en direction horizontale.

6. Marche coulissante selon l'une des revendications 1 à 5, **caractérisée en ce que** l'élément de mesure d'allongement est réalisé en tant que jauge extensométrique.

7. Marche coulissante selon l'une des revendications 1 à 6, **caractérisée en ce que** l'élément de joue latéral est un élément de joue latéral (38) s'étendant sensiblement de manière rectiligne et que l'élément de joue de capteur (40) comprend la partie coudée (42), dans laquelle l'élément de joue latérale (38) et l'élément de joue de capteur (40) sont reliés l'un à l'autre par engagement positif.

8. Marche coulissante selon la revendication 7, **caractérisée en ce que** l'élément de joue latérale (38) et l'élément de joue de capteur (40) sont reliés l'un à l'autre par un assemblage vissé de façon amovible.

9. Marche coulissante selon la revendication 8, **caractérisée en ce que**, dans la région de l'assemblage vissé, au moins une clavette (50) est disposée.

10. Marche coulissante selon l'une des revendications 1 à 9, **caractérisée en ce que** les deux joues latéraux comprennent une respective partie coudée (42) avec élément de mesure d'allongement.

11. Marche coulissante selon l'une des revendications 1 à 10, **caractérisée en ce que** au moins l'un des galets (34) d'au moins l'une des deux joues latéraux est réalisée en tant que galet de profilage.
